# EUROPÄISCHE PATENTANMELDUNG

(11) **EP 0 898 183 A1**
(43) Veröffentlichungstag der Anmeldung: **24.02.1999**
(21) Anmeldenummer: 98112970.3
(22) Anmeldetag: 13.07.1998
(51) Int. Cl.: G02B 5/28, G02B 21/08, C03C 17/34

(54) **Operationsmikroskop mit einem Interferenzfilter und Interferenzfilter**

(30) Priorität: 18.08.1997 DE 19735832
(71) Anmelder: Carl Zeiss, D-89520 Heidenheim (Brenz) (DE); CARL ZEISS-STIFTUNG HANDELND ALS CARL ZEISS, D-89518 Heidenheim (Brenz) (DE)
(72) Erfinder: Gänswein, Bernhard, Dr., 73433 Aalen (DE); Mahler, Andrea, 73447 Oberkochen (DE); Möller, Gerhard, Dr., 73431 Aalen (DE); Luwig, Petra, 89551 Ochsenberg (DE)

(57) **Zusammenfassung**

Es wird ein Operationsmikroskop (19) mit einer Beleuchtungseinrichtung (21) und einem Interferenzfilter (3) im Beleuchtungsstrahl (9) beschrieben sowie ein Interferenzfilter, das für den Einbau in das Operationsmikroskop geeignet ist. Um die Gelbstichigkeit bei bislang bekannten UV-Interferenzfiltern zu verhindern wird erfindungsgemäß vorgeschlagen als unmittelbar auf das Trägersubstrat aufgebrachte Interferenzschicht eine zwischen 8 und 12 nm dicke Schicht aus Yttriumfluorid oder aus Thoriumfluorid oder aus Lanthanfluorid oder aus Ceriumfluorid zu wählen.

## Beschreibung

Die Erfindung betrifft ein Operationsmikroskop mit einer Beleuchtungseinrichtung und einem Interferenzfilter, das im Beleuchtungsstrahlengang der Beleuchtungseinrichtung angeordnet ist, sowie ein entsprechendes Interferenzfilter.

Derartige Operationsmikroskope sind aus dem Stand der Technik bereits seit längerem bekannt. Die betreffenden Interferenzfilter sind hierbei im Beleuchtungsstrahlengang des Operationsmikroskopes deshalb vorgesehen, um gewisse spektrale Bereiche aus dem Beleuchtungsstrahl herauszufiltern, um hierdurch entweder den mit dem Beleuchtungsstrahl beleuchteten Patienten und/oder den Benutzer des Operationsmikroskopes vor schädlicher Strahlung zu schützen.

In letzter Zeit ist insbesondere in der Fachwelt die Forderung aufgetreten, UV-Strahlen mit einer Wellenlänge unterhalb von 408 nm aus den Beleuchtungsstrahlen von Operationsmikroskopen herauszufiltern. Hierzu sind aus dem Stand der Technik eine große Variationsbreite an Interferenzfiltern bekannt. Bei dem Versuch, bekannte Interferenzfilter dazu einzusetzen, um die besagte UV-Strahlung aus dem Beleuchtungsstrahl herauszufiltern, wurde festgestellt, daß alle der Patentanmelderin bekannten Interferenzfilter den Nachteil aufweisen, daß der Beleuchtungsstrahl durch die Filterung einen Gelbstich erhält und somit eine optimale Beleuchtung des durch das Operationsmikroskop betrachteten Patienten nicht mehr möglich ist.

Der Erfindung liegt deshalb die Aufgabe zugrunde, ein Interferenzfilter für ein Operationsmikroskop zu entwickeln, welches UV-Strahlen ausfiltert, ohne hierbei im Beleuchtungsstrahl einen Gelbstich zu erzeugen.

Die Aufgabe wird gemäß Ansprüchen 1 und 2 gelöst, indem die unmittelbar auf das Trägersubtrat aufgebrachte Interferenzschicht eine zwischen 8 bis 12 nm dicke Schicht aus Yttriumfluorid oder aus Thoriumfluorid oder aus Lanthanfluorid oder aus Ceriumfluorid ist.

Der besondere Vorteil einer solchen Schicht ist darin zu sehen, daß hierdurch der bei bislang bekannten UV-Filtern bestehende Gelbstich vermieden werden kann.

Aus der WO 94/09393 ist zwar bereits ein mit einem Schichtstapel aus abwechselnden Yttriumfluorid- und Zinksulfid-Interferenzschichten versehener Reflektor für einen zweifarbigen Laser, nämlich in dem gezeigten Beispiel Helium-Neon-Laser und CO₂-Laser bekannt, der so ausgelegt ist, daß sowohl elektromagnetische Wellen im sichtbaren, wie auch im infraroten Bereich besonders vorteilhaft reflektiert werden. Der Patentanmeldung ist jedoch weder die erfindungsgemäße 8 bis 12 nm dicke erste auf das Trägersubstrat aufgebrachte Schicht aus Yttriumfluorid oder Ceriumfluorid oder Lanthanfluorid oder Throriumfluorid zu entnehmen noch die konkret nachfolgenden Schichtfolgen, die für das erfindungsgemäße UV-Interferenzfilter jedoch genau die besonders erwünschte Wirkung haben, daß der Gelbstich vermieden wird.

Die Schichtdicke der unmittelbar auf das Trägersubstrat aufgebrachten Interferenzschicht variiert hierbei einmal in Abhängigkeit von der gewünschten Bandkante des Interferenzfilters und zum anderen in Abhängigkeit vom verwendeten Material. Bei einer Bandkante von 408 nm und bei Verwendung von Yttriumfluorid beträgt die Schichtdicke 10nm. Bei Veränderung der Bandkante verändert sich die Schichtdicke proportional zur Bandkante, während sich bei Veränderung des Materials die Schichtdicke in Abhängigkeit von der materialspezifischen optischen Weglänge verändert. Die mathematischen Zusammenhänge von Interferenzfiltern sind dem hier angesprochenen Fachmann bereits langjährig bekannt und sollen an dieser Stelle deshalb nicht weiter vertieft werden.

Weiterbildungen der Erfindung zeigen die Ansprüche 3 bis 6.

In der Weiterbildung der Erfindung gemäß Anspruch 3 weist das betreffende Interferenzfilter zusätzlich wenigstens eine Schicht aus Zinksulfid auf. Dies hat den besonderen Vorteil, daß neben der durch die Interferenzwirkung entstehenden Filterung zusätzlich die Absorptionswirkung des Zinksulfides hinzukommt, da das Zinksulfid relativ genau im Bereich von 408 nm Strahlung absorbiert. Durch diesen Effekt kann die UV-Strahlung besonders gut aus dem Beleuchtungsstrahl herausgefiltert werden.

Vorteilhafterweise weist das Interferenzfilter gemäß Anspruch 4 achtzehn Interferenzschichten und mehr auf, da hierbei eine besonders steile Bandkante erzielt werden kann.

Weitere Vorteile und Weiterbildungen der Erfindung ergeben sich aus der Beschreibung der Figuren.

Hierin zeigen:
- Figur 1: ein Operationsmikroskop im Schnitt mit einem erfindungsgemäßen Interferenzfilter;
- Figur 2: ein ausschnittsweise dargestelltes, erfindungsgemäßes Interferenzfilter.

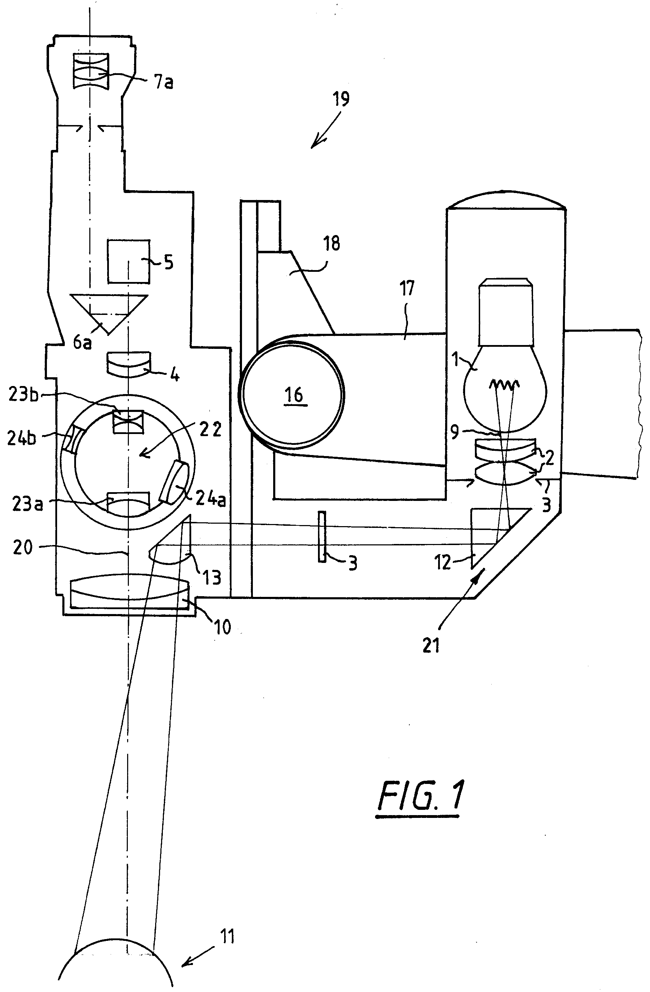

Figur 1 zeigt ein schematisch, nicht maßstäblich dargestelltes Operationsmikroskop (19) im Schnitt. Ein derartiges Operationsmikroskop ist beispielsweise auf Seite 243 im "Handbuch für Augenoptik", herausgegeben von Carl Zeiss, Oberkochen (1987) gezeigt, auf das hiermit ausdrücklich Bezug genommen wird.

Im folgenden soll der Beobachtungsstrahlengang des Operationsmikroskopes (19) erläutert werden. Zunächst führt der Beobachtungsstrahl eines hier nur schematisch gezeigten Beobachtungsobjektes (11) durch das Hauptobjektiv (10) und den aus drei Linsen bestehenden Vergrößerer (23a, 23b, 4) auf das Prisma (5). Der Vergrößerer ist hierbei so ausgestaltet, daß die Vergrößerung verändert werden kann, indem die beiden im Vergrößerungswechsler (22) enthaltenen Linsen (23a, 23b) durch Drehung des Vergrößerungswechslers (22) gegen die beiden anderen Linsen (24a, 24b) ausgetauscht werden.

Der Strahl, der nun auf dem Prisma (5) aufgetroffen ist, wird hieran geteilt und auf die Prismen (6a, 6b (hier nicht gezeigt)) geworfen, von wo er dann ebenfalls reflektiert wird und mittels der Okulare (7a, 7b (hier nicht gezeigt)) betrachtet werden kann.

Das Operationsmikroskop (19) ist über die Elemente (16-18) an einem nicht gezeigten Stativ beweglich befestigt.

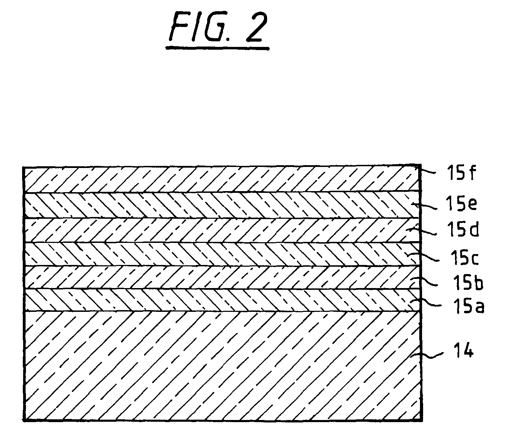

Zur Beleuchtung des zu betrachtenden Beobachtungsobjektes (11) weist das Operationsmikroskop (19) hierbei eine Beleuchtungseinrichtung (21) auf. Mit (1) ist hierbei die Lichtquelle der Beleuchtungseinrichtung (21) bezeichnet. Der von der Lichtquelle (1) ausgehende Beleuchtungsstrahl (9) wird hierbei durch ein Kondensorsystem (2) aufgeweitet und über Umlenkprismen (12, 13) und das Hauptobjektiv (10) auf das Beobachtungsobjekt (11) geworfen. In dem besagten Beleuchtungsstrahl (9) befindet sich hierbei das erfindungsgemäße Interferenzfilter (3), das dazu dient, um die UV-Strahlung aus dem Beleuchtungsstrahl (9) herauszufiltern. Der konkrete Aufbau des Interferenzfilters (3) soll nunmehr anhand von Figur 2 näher erläutert werden.

Figur 2 zeigt auszugsweise, rein schematisch ein besonders vorteilhaftes erfindungsgemäßes Interferenzfilter. Mit (14) ist hierbei ein Trägersubstrat bezeichnet. Zum Interferenzfilter ist hierbei vorab allgemein zu sagen, daß das Interferenzfilter entweder wie im Zusammenhang mit Figur 1 dargestellt als Transmissionsfilter ausgebildet sein kann, so daß der Beleuchtungsstrahl (9) durch das Filter (3) hindurchtritt. Für diesen Fall ist das Trägersubstrat (14) transparent ausgebildet und beispielsweise aus Glas oder aus Plastik gefertigt. Das Interferenzfilter kann selbstverständlich aber auch als Reflexionsfilter ausgebildet werden, so daß das Trägersubstrat (14) dann als Reflektor ausgebildet ist. Dies kann entweder geschehen, indem das Trägersubstrat (14) aus einem reflektierenden Metall, wie beispielsweise Silber, Gold oder Aluminium gefertigt ist oder indem ein anderweitiges Substrat, wie beispielsweise Glas oder Kunststoff verwendet wird, das mit einer entsprechend reflektierenden Schicht versehen ist. Es sei an dieser Stelle ausdrücklich darauf hingewiesen, daß unter dem Trägersubstrat (14) für diesen Fall auch die bezeichnete Kombination aus Substrat und reflektierender Oberfläche zu verstehen ist.

Der Aufbau der auf das Trägersubstrat (14) aufgedampften Schichten (15a, 15b, 15c, ...) ergibt sich wie nachfolgend beschrieben.

Diesbezüglich ist vorab zu sagen, daß auch Figur 2 rein schematisch und nicht maßstäblich dargestellt ist und hierin lediglich die ersten sechs Schichten (15a-15f) gezeigt wurden, während die restlichen 14 Schichten der Einfachheit halber weggelassen wurden.

Da das beschriebene Interferenzfilter 20 Schichten aufweist, wurde zur Beschreibung der einzelnen Schichten (15a, 15b, 15c, ...) eine Tabelle gewählt. Hierin steht die Bezeichnung A stellvertretend für eine Schicht aus Yttriumfluorid, sowie die Bezeichnung B stellvertretend für Zinksulfid:

**Tabelle 1**

| Schicht-Nr. | Schichtbez. | Schichtmat. | Schichtdicke in nm |
|---|---|---|---|
| 1 | 15a | A | 10 |
| 2 | 15b | B | 15,12 |
| 3 | 15c | A | 59,98 |
| 4 | 15d | B | 31,88 |
| 5 | 15e | A | 59,95 |
| 6 | 15f | B | 31,88 |
| 7 | 15g | A | 59,95 |
| 8 | 15h | B | 31,88 |
| 9 | 15i | A | 59,95 |
| 10 | 15j | B | 31,88 |
| 11 | 15k | A | 59,95 |
| 12 | 15l | B | 31,88 |
| 13 | 15m | A | 59,95 |
| 14 | 15n | B | 31,88 |
| 15 | 15o | A | 59,95 |
| 16 | 15p | B | 31,88 |
| 17 | 15q | A | 59,95 |
| 18 | 15r | B | 31,88 |
| 19 | 15s | A | 59,95 |
| 20 | 15t | B | 14,42 |

Entscheidende Bedeutung bei dem erfindungsgemäßen Interferenzfilter hat hierbei die erste auf dem Substrat (14) aufgebrachte Schicht (15a), aus Yttriumfluorid mit einer Schichtdicke von 10 nm. Die betreffende Schicht (15a) verhindert in nachdrücklicher Weise den bei bislang bekannten UV-Interferenzfiltern anhängigen Gelbstich.

Wie bereits oben ausgeführt, kann anstelle der Yttriumfluoridschicht natürlich auch eine Schicht aus Thoriumfluorid oder aus Lanthanfluorid oder aus Ceriumfluorid verwendet werden. Hierdurch ergeben sich für die betreffenden Schichten entsprechend der unterschiedlichen optischen Weglängen selbstverständlich entsprechend andere Schichtdicken. Die Schichtdicken können gleichfalls auch variieren, wenn, wie ebenfalls bereits oben erwähnt, die Bandkante des Filters verändert werden soll.

## Patentansprüche

1. Operationsmikroskop (19) mit einer Beleuchtungseinrichtung (21) und einem Interferenzfilter (3) im Beleuchtungsstrahl (9), wobei das Interferenzfilter (3) wenigstens ein Trägersubstrat (14) und eine Interferenzschicht (15a) aufweist, wobei die unmittelbar auf dem Trägersubstrat aufgebrachte Interferenzschicht (15a) eine zwischen 8 und 12 nm dicke Schicht aus Yttriumfluorid oder aus Thoriumfluorid oder aus Lanthanfluorid oder aus Ceriumfluorid ist.

2. Interferenzfilter (3) umfassend wenigstens ein Trägersubstrat (14) und wenigstens eine Interferenzschicht (15a), wobei die unmittelbar auf dem Trägersubstrat aufgebrachte Interferenzschicht (15a) eine 8 bis 12 nm dicke Schicht aus Yttriumfluorid oder aus Thoriumfluorid oder aus Lanthanfluorid oder aus Ceriumfluorid ist.

3. Operationsmikroskop oder Interferenzfilter nach Ansprüchen 1 oder 2, wobei das Interferenzfilter zusätzlich wenigstens eine Zinksulfidschicht (15b) aufweist.

4. Operationsmikroskop oder Interferenzfilter nach Ansprüchen 1-3, wobei das Interferenzfilter wenigstens 18 Interferenzschichten aufweist.

5. Operationsmikroskop oder Interferenzfilter nach Ansprüchen 1 bis 4, wobei die unmittelbar auf dem Trägersubstrat aufgebrachte Interferenzschicht eine 10 nm dicke Schicht ist.

6. Operationsmikroskop oder Interferenzfilter nach Ansprüchen 1-5, wobei das Interferenzfilter folgende Schichtfolge aufweist und hierbei mit A eine Schicht aus Yttriumfluorid oder Thoriumflourid oder Lanthanfluorid oder aus Ceriumfluorid bezeichnet ist und mit B eine Schicht aus Zinksulfid und die Schichtdicken um plus/minus zwei nm variieren können:
| Schicht-Nr. | Material | Schichtdicke in nm |
|---|---|---|
| 1 | A | 10 |
| 2 | B | 15,12 |
| 3 | A | 59,98 |
| 4 | B | 31,88 |
| 5 | A | 59,95 |
| 6 | B | 31,88 |
| 7 | A | 59,95 |
| 8 | B | 31,88 |
| 9 | A | 59,95 |
| 10 | B | 31,88 |
| 11 | A | 59,95 |
| 12 | B | 31,88 |
| 13 | A | 59,95 |
| 14 | B | 31,88 |
| 15 | A | 59,95 |
| 16 | B | 31,88 |
| 17 | A | 59,95 |
| 18 | B | 31,88 |
| 19 | A | 59,95 |
| 20 | B | 14,42 |
